(19) Europäisches Patentamt
European Patent Office
Office européen des brevets

(11) Publication number: **0 107 474 A2**

(12) # EUROPEAN PATENT APPLICATION

(21) Application number: 83306323.3

(22) Date of filing: 18.10.83

(51) Int. Cl.³: **B 65 B 9/20**, B 65 B 61/18

(30) Priority: 18.10.82 JP 181264/82
18.11.82 JP 201171/82
31.01.83 JP 12792/83
14.02.83 JP 21603/83
09.09.83 JP 165144/83

(43) Date of publication of application: 02.05.84 Bulletin 84/18

(84) Designated Contracting States: AT DE FR GB

(71) Applicant: UNITIKA LTD., No. 50, Higashihonmachi 1-chome, Amagasaki-shi Hyogo (JP)

(72) Inventor: Ohigashi, Yoshiaki, No. 55, Ujikageyama, Uji-shi Kyoto-fu (JP)
Inventor: Matsumura, Wakuo, No. 10-18, Nagisaminamimachi, Hirakata-shi Osaka-fu (JP)
Inventor: Kitazawa, Noboru, No. 70, Shichikutakanawacho, Kita-ku Kyoto-shi Kyoto-fu (JP)

(74) Representative: Deans, Michael John Percy et al, Lloyd Wise, Tregear & CO. Norman House 105-109 Strand, London WC2R OAE (GB)

(54) **Method and apparatus for producing bag-shaped packages.**

(57) Methods and apparatus allowing the automatic and continuous production of bag-shaped packages each filled with a predetermined weight or volume of contents and having a cap body integrally attached thereto are described. A predetermined length of an elongate flat film is intermittently withdrawn from a supply thereof. A hole is punched in the film at predetermined intervals. The cap body portion of a cap body having a flange portion surrounding the cap body portion the inner diameter of which is larger than the inner diameter of the punched hole is inserted through the punched hole, the outer diameter of the cap body portion being less than the inner diameter of the hole. The flange portion of the cap body is heat sealed to the film. The flat film is formed into a generally tubular product configuration by bringing the longitudinally marginal edges of the film into contact with one another in an overlapped or juxtaposed relation und longitudinally heat sealing the said edges together. The tubular film is heat sealed transversely to the longitudinal heat seal to form an upwardly open bag-shaped product which is filled with a specific predetermined weight or volume of content and again transversely heat sealed at a position upstream of the first seal to form a closed filled bag-shaped product and to form the first transverse seal for the next adjacent bag-shaped product. The filled packages are cut off along the centre line of the transverse seals.

12f
13
110
111
14
60
70
40a
50
25
S
21
20
40
12e
72
S1
12d
82
200
61
S2
24
T
71
68
80
83
81
12b
12c
84
12a
1a
90
10
1
91
A
A
B
B
92
92
2
11
D
D
C
C
100
101

EP 0 107 474 A2

# METHOD AND APPARATUS FOR PRODUCING BAG-SHAPED PACKAGES

This invention relates to methods and apparatus for the production of bag-shaped packages filled with contents and having a cap body integrally attached thereto.

Conventional packages formed of synthetic resin and filled with products of various kinds are well known and readily found in ordinary consumer markets. Numerous references to such packages can be found in patent literature, including, for example, U.S Patent Nos: 4004399, 4004951 and 4043098.

The usual conventional practice in the formation of such packages from synthetic resin film is to form a pouch or open bag-shaped package, to fill it with the desired filling such as pulverized material, or liquid or viscous fluid, and finally to heat seal the open end. Thus, such conventional packages do not have integral cap bodies. Consequently, when a consumer opens the package by cutting off a corner, for example, the contents generally have to be used at once, or else are wasted.

In an effort to avoid this problem, attempts have been made to provide conventional bag-shaped packages with, for example, a cap body so that the required weight or volume of contents may be removed from the package which can then be closed again. Typical of these attempts to overcome the above mentioned problem is the proposal to form a bag with a cap body heat sealed at one corner, or at some other selected location, using the same kinds of multi-layer composite film structure as used for conventional bag-shaped packages of synthetic resin. The contents are filled into the pre-formed capped bodies by removing the screw cap therefrom at a filling station separate from the bag forming operation, and then closing the filling port with the screw cap.

So far as the present Applicants are aware, it has not previously been suggested and, prior to the making of the present invention, it has not been feasible, to automatically and continuously produce bag-shaped packages each filled with a predetermined weight or volume of contents and having a cap body integrally attached thereto.

In accordance with one aspect of the present invention, we provide a method for the automatic and continuous production of bag-shaped packages each filled with a predetermined weight or volume of contents and having a cap body integrally attached thereto, characterized in that said method comprises the steps of: intermittently withdrawing a predetermined length of an elongate flat film from a supply thereof; punching out a hole in the film at predetermined intervals; inserting the cap body portion of a cap body having a flange portion surrounding the cap body portion the inner diameter of which is larger than the inner diameter of the punched hole, through the punched hole while the film is held stationary, the outer diameter of the cap body portion being less than the inner diameter of the hole; heat sealing the flange portion of the cap body to the film while the film is held stationary; forming the flat film into a generally tubular product configuration by bringing the longitudinal marginal edges of the film into contact with one another in an overlapped or juxtaposed relation; and longitudinally heat sealing the said edges together as the film passes along a downward portion of its travel; heat sealing the tubular film transversely to the longitudinal heat seal to form an upwardly open bag-shaped product; filling the bag-shaped product with a specific predetermined weight or volume of content; transversely heat sealing the tubular film at a position upstream of the first said seal to form a closed filled bag-shaped product and to form the first said transverse seal for the next adjacent bag-shaped prpduct; and cutting off the filled bag-shaped package along the centre line of the second said transverse seal while the film is held stationary.

In a second and alternative aspect thereof, the invention provides apparatus for the automatic and continuous production of bag-shaped packages each filled with a predetermined weight or volume of contents and having a cap body integrally attached thereto, characterized in that said apparatus comprises: transport means for causing intermittent longitudinal travel by a predetermined length of an elongate flat film drawn from a supply thereof; a punching section adapted to punch out a hole on the film each time the latter is held stationary during its intermittent forward travel; a cap body fitting section located downstream of said punching section and adapted to fit the cap body section of a cap body, having a flange portion surrounding the cap body portion, the outer diameter of which is larger than the inner diameter of the punched hole, into the punched hole each time the film is held stationary, the outer diameter of the cap body portion being less than the inner diameter of the punched hole; a cap body sealing section located downstream of said cap body fitting section and adapted, each time the film is held stationary, to heat seal the flange portion of a cap body to the film; a longitudinal sealing section located downstream of said cap body sealing section and adapted to join the respective longitudinal marginal edges of the film together in overlapped or juxtaposed relation to form a generally tubular configuration; a transverse sealing section downstream of said longitudinal section and adapted to form a transverse seal across the tubular film thereby to form an upwardly open bag-shaped product for filling and to close an already filled such product; a filling section adapted to fill an upwardly open bag-shaped product with a predetermined weight or volume of content at said transverse sealing section; and a cutting section downstream of said transverse sealing section and adapted each time the film is held stationary, to separate a filled bag-shaped product from the next adjacent bag along the centre line of the transverse heat sealed area therebetween.

As will become apparent from the detailed description of preferred embodiments which follow hereafter, the method and apparatus of the present invention enables the continuous production at relatively inexpensive cost of a plurality of bag-shaped packages each with a cap body integrally attached thereto and having a predetermined weight or volume of contents. The packages are formed and filled in the same line with high operational efficiency using continuous elongate thin flat film. The manufacturing process is arranged such that the cap body is located at substantially the same position on the film in each package.

The invention is hereinafter more particularly described by way of example only with reference to the accompanying drawings, in which:-

Fig. 1 is a somewhat schematic overall side elevational view of an embodiment of apparatus constructed in accordance with the present invention;

Fig. 2 is a side elevational view on an enlarged scale of a punching unit in the punching section of the apparatus of Fig. 1;

Fig. 3 is a front elevational view of the punching unit of Fig. 2;

Fig. 4 is a side elevational view of a film holding station of the apparatus of Fig. 1;

Fig. 5 is a front elevational view of the film holding station of Fig. 4;

Fig. 6 is a side elevational view, partly in section, and with parts omitted, of the cap body fitting section of the apparatus of Fig. 1;

Fig. 7 is a plan view of the cap body fitting section of Fig. 6, again with parts omitted;

Fig. 8 is a plan view of cap alignment means and cap body feeding means of the cap body fitting section of the apparatus of Fig. 1;

Fig. 9 is a side elevational view of the cap body feeding means of Fig. 8;

Fig. 10 is an enlarged part sectional side elevational view of the cap body sealing section of the apparatus of Fig. 1;

Fig. 11 is a partly schematic front elevational view of the longitudinal sealing section of the apparatus of Fig. 1;

Fig. 12 is a generally schematic overall side elevational view of a second embodiment of apparatus also constructed in accordance with the present invention; and

Fig. 13 shows at (X) and (Y) respective plan views of final products which may be produced by means of the method and apparatus of the present invention.

Film to be used in the practice of the present invention should desirably have certain physical characteristics including resistance against the formation of pin holes, gas barrier properties and other properties useful for film material for the formation of packages and which may vary depending on the particular application.

This film may be a single layer of film made of polyolefin or the like material, but we prefer to use a composite film comprising more than two layers and including a sealant layer.

The choice of the structure of the composite film depends in part on the chosen manner of joining the marginal side edge portions thereof to one another to form a generally tubular configuration (that is: whether a juxtaposition type seal is employed or an overlap type seal). In a juxtaposition seal, sealing is effected with the inside faces of the two marginal edge portions in contact with one another, whereas in an overlap seal, sealing is effected with the inside face of one marginal edge portion in contact with the outside face of the other marginal edge portion.

For a juxtaposition type seal the composite film preferably includes at least an outer layer of polyolefin based film which has excellently high safety from the viewpoint of hygiene with respect to foodstuffs which may constitute the content of the packages and good heat sealability and another layer which has physical properties such as resistance against the formation of pin holes, gas barrier properties and other properties useful for a bag-shaped container, said other layer serving as a base film.

On the other hand, for an overlap type seal a composite film comprising at least three layers is preferably used, wherein the outer layer is constituted by a polyolefin based film which has excellently high safety from the viewpoint of hygiene and good sealability, an intermediate layer serves at least as a base film and the opposite outer layer is constituted by a film having good sealability.

It should be noted that the film employed with the embodiments of apparatus described in detail hereinafter has a number of marks printed thereon in equally spaced relation in the longitudinal direction of the film, the spacing between the adjacent marks being determined in dependence on the capacity of the bag-shaped package (hereinafter referred to simply as packages) which will be produced by a method in accordance with the invention. The following description will be made with unreeled film identified by reference numeral 1 and a roll of film identified by reference numeral 2.

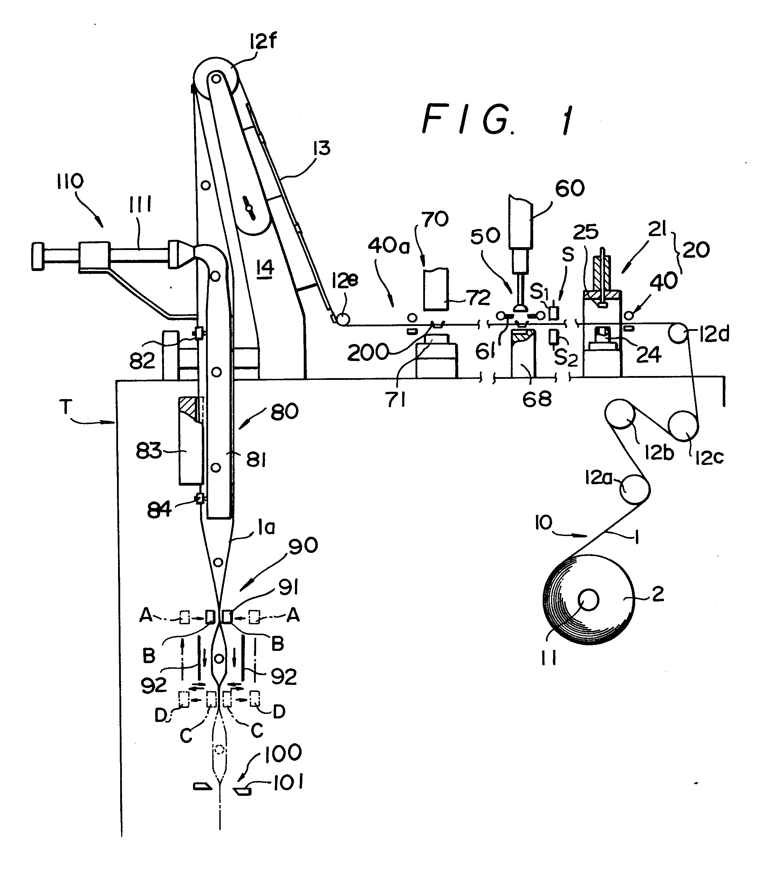

In Fig. 1 which is a somewhat schematic view of a first embodiment of apparatus in accordance with the present invention, a framework T mounts the principal components of the apparatus at predetermined distances therebetween, a plurality of rollers 12*a* to 12*f* including a dancer roller 12*b* as well as a guide member 13 suitably disposed to serve as auxiliary members for intermittent transport of film 1 from a supply 2 thereof (here a roll).

Film section 10 includes a support shaft 11 on which the roll of film 2 is rotatably supported. A sensor (S) detects the marks printed on the film 1 one by one and transmits a detected signal to each of the principal component sections of the apparatus so as to actuate the latter in timed relation. The apparatus further includes a punching section 20, a cap body fitting section 50, a cap body sealing section 70, a longitudinal sealing section 80, a transverse sealing section 90 which serves also for transport of the film through the apparatus, a filling section 110 and a cutting section 100.

Since operation of each of the punching section 20, the cap body fitting section 50, the cap body sealing section 70, the longitudinal sealing section 80, the cutting section 100 and the filling section 110 is adapted to start in response to mark detection signals transmitted from the sensor S as the film 1 is intermittently transported, it will be helpful to describe how the sensor S and the transverse sealing section 90, which serves also for film transport, operate.

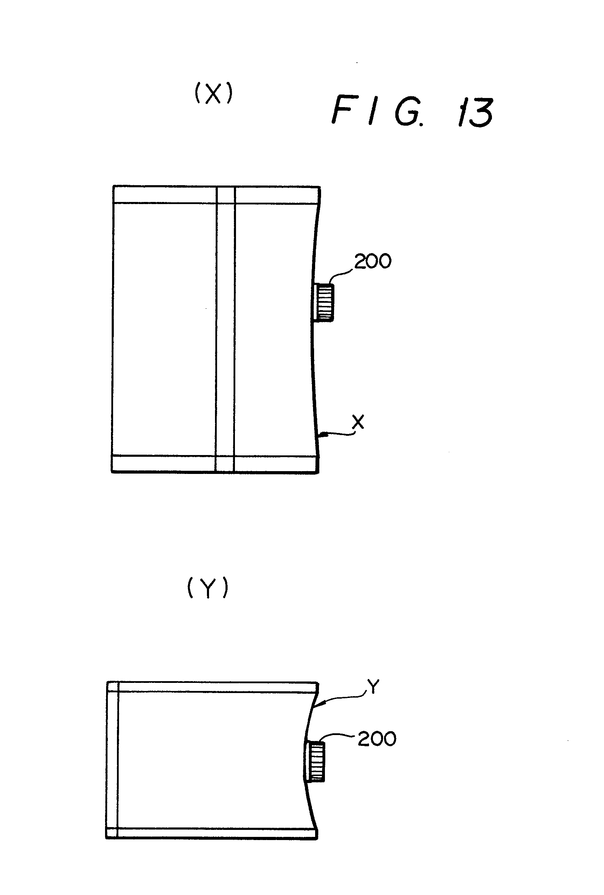

The sensor S is intended to optically detect the existence of marks printed on the elongate film 1 in an equally spaced relation in the longitudinal direction thereof, the distance between the adjacent marks being determined in dependence on the capacity of the package (see Fig. 13), and it comprises a light beam emitting portion $S_1$ and a light beam receiving portion $s_2$.

After completion of a series/of operations in the respective working sections of the apparatus which were initiated in response to detection signals transmitted from the sensor S, film 1 is unreeled from the film supplying section 10 and is transported by means of a pair of transverse seal bars 91 in the transverse sealing section 90, while transverse sealing is effected on the generally tubular film formed on the longitudinal sealing section 80 disposed upstream of the transverse sealing section 90, the tubular film being firmly clamped from both sides by the transverse seal bars 91 during the transverse sealing operation.

The transverse seal bars 91 operate as described below. They are held stationary at a waiting position A (Fig. 1) until each of operations in the various working sections, initiated by a detection signal transmitted from the sensor S has been completed. After completion of these operations they are displaced to the clamping position B to firmly hold the tubular film or the filled bag-shaped product from both sides and initiate pulling operation immediately after initiation of the transverse sealing operation. Until the sensor S detects the existence of the next mark on the film 1 they are displaced downwardly arriving at a position C where the transverse sealing and downward pulling operation is completed. They are then displaced away from the positions C in accordance with said signal to reach the release positions D, and finally they are brought back to the initial waiting position A.

Thus, the film 1 is intermittently forwardly transported through the apparatus.

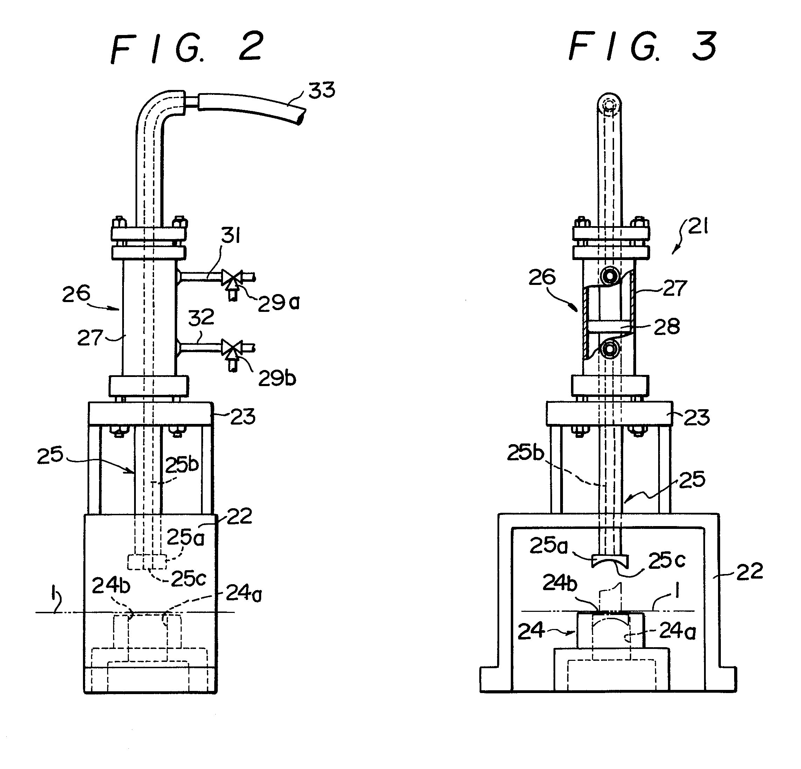

We shall next describe the punching section 20 with reference to Figs. 2 to 5. The punching section 20 is disposed midway of the travelling passage of the film 1 and includes a punching station 21 which essentially comprises a stationary punching die 24 fixedly mounted in a frame 22 beneath the path of travel of the film 1 and a movable punch 25 located above the path of travel of the film 1 and adapted to be reciprocated up and down by means of a driving unit 26 fixedly mounted on a support stand 23, said movable punch 25 extending through the frame 22; and further includes a film holding station 40 to be described below.

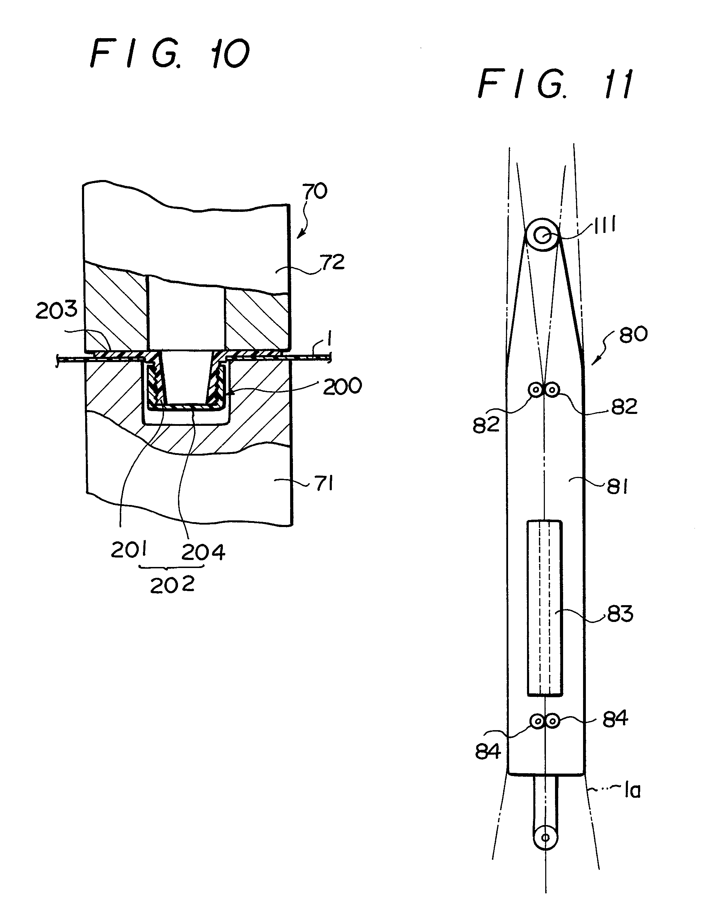

As illustrated in Figs. 2 and 3, the stationary punching die 24 in the punching station 21 has a through hole $24_a$ the dimensions of which correspond to the dimensions of the screw body cap portion 202 of a cap body 200 with a flange portion 203 attached thereto (as illustrated in Fig. 10) whereby the said screw body cap portion may be freely inserted through the punched hole produced. The upper circular edge of the through hole $24_a$ defines a cutting edge $24_b$. The movable punch 25 includes a cutting edge $25_a$ at the lowermost end thereof adapted for sliding contact within the cutting edge $24_b$ and is reciprocated by alternately introducing compressed air into upper and lower chambers defined above and below a piston 28 which is slidably received in cylinder 27 of driving unit 26, said introduction of compressed air being controlled by means of three way valves $29_a$ and $29_b$ on piping 31 and 32. The rod-shaped movable punch 25 has a through passage $25_b$ extending along its centre axis which serves as an air passage and is in communication with a rubber hose 33 whereby compressed air delivered through the communication passage $25_b$ is blown out of a discharge port $25_c$ at the lowermost end of the latter. By blowing compressed air through the discharge port $25_c$ either continuously or just at the time when punching is effected it is possible to remove any fragment of film punched out of the film 1 without fail thereby preventing the tendency for such fragments to stick to the film 1 by electrostatic force, with the possibility of malfunction in subsequent operations of the apparatus and inclusion of film fragments in the final package. Thus, a hole through which a cap body is to be inserted can be punched out by displacing the movable punch 25 to the lowermost end position while the film 1 is held stationary. By repeating the punching operation a succession of cap body fitting holes may be formed in line along the film 1 at predetermined equal spacings in the longitudinal direction.

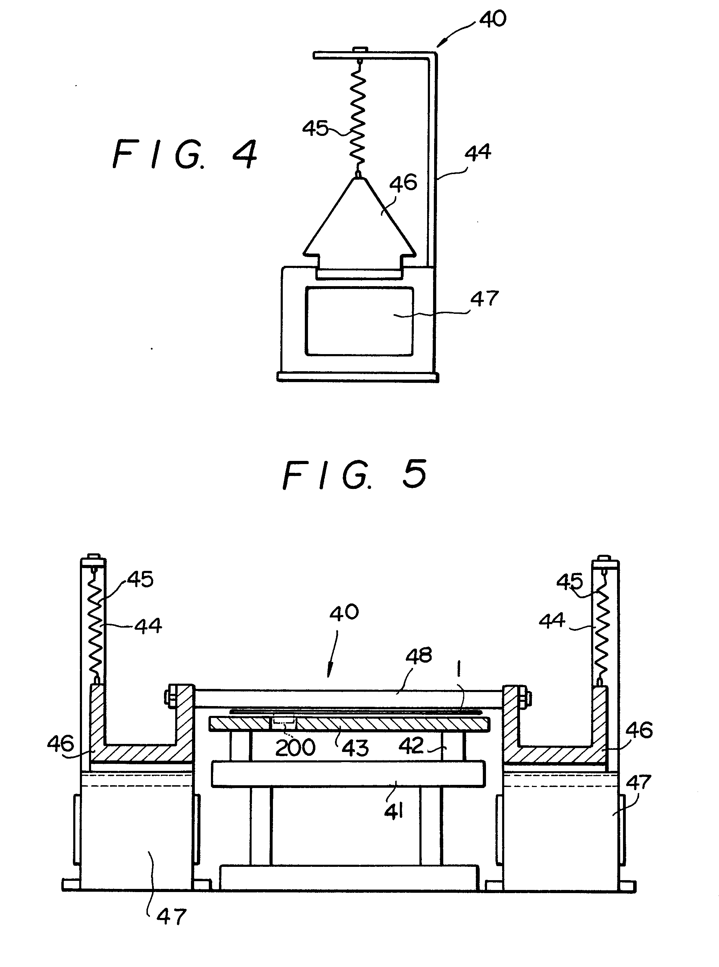

The film holding station 40 is shown in Figs. 4 and 5, and is adapted to operate immediately after a mark detection signal is transmitted from the sensor S whereby the film comes to an immediate stop at a predetermined correct position without elastic elongation thereof. After completion of the operation of the punching station 21, the film holding station 40 resumes its original position. As illustrated in Figs. 4 and 5, the film holding station 40 comprises a table 43 made of elastic material which is mounted at a predetermined height above a base 41 with the aid of a plurality of columns 42, a pair of U-shaped members 46 made of a magnetizable material and which are resiliently suspended from the top end of columns 44 by means of coil springs 45, a pair of electromagnets 47 adapted to magnetically attract said magnetizable members 46 in response to detection signals transmitted from the sensor S and a roller 48 made of elastic material, fixedly connected to the magnetizable members 46 at its ends and adapted to come into pressure contact with the table 43 with the film 1 interposed therebetween as it is lowered under the influence of the attractive force generated by the electromagnets 47.

After a cap body fitting hole is punched out on the film 1 at the punching section 20, the film 1 is transported by a predetermined distance so that said cap body fitting hole reaches the cap body fitting section 50 at which the cap body portion 202 is fitted into the cap body fitting hole with its flange portion 203 being held on the film 1.

As will readily be seen from Fig. 10, a cap body 200 comprises a cap body portion 202 and a flange portion 203. The cap body portion 202 includes a cap 204 (such as a screw cap) of which the outer diameter is dimensioned smaller than the inner diameter of the punched hole and a cap base 201 on to which said screw cap 204 is threadedly fitted. To allow the flange portion 203 to be easily heat sealed to the layer of film constituting the inner wall of the package it is preferable that the base flange portion 203 is made of the same material as that of said film. On the other hand, in view of the requirement for easy unscrewing of the screw cap 204 at a time when the latter is to be removed from a package it is preferable that the cap 204 is made of different material from that of the cap base 201. For instance, the cap base 201 is suitably made of polyethylene, whereas the cap 204 is suitably made of polypropylene or like material.

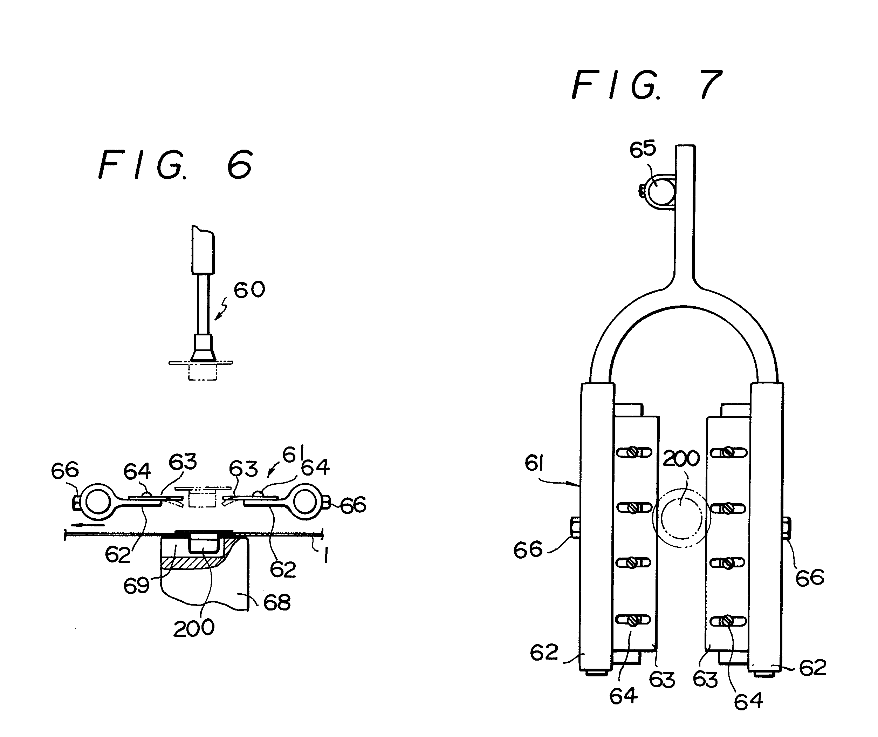

The cap body fitting section 50 is best shown in Figs. 6 to 9, and comprises a cap body alignment unit 51, a cap body feeding unit 55 and a cap body insert unit 60.

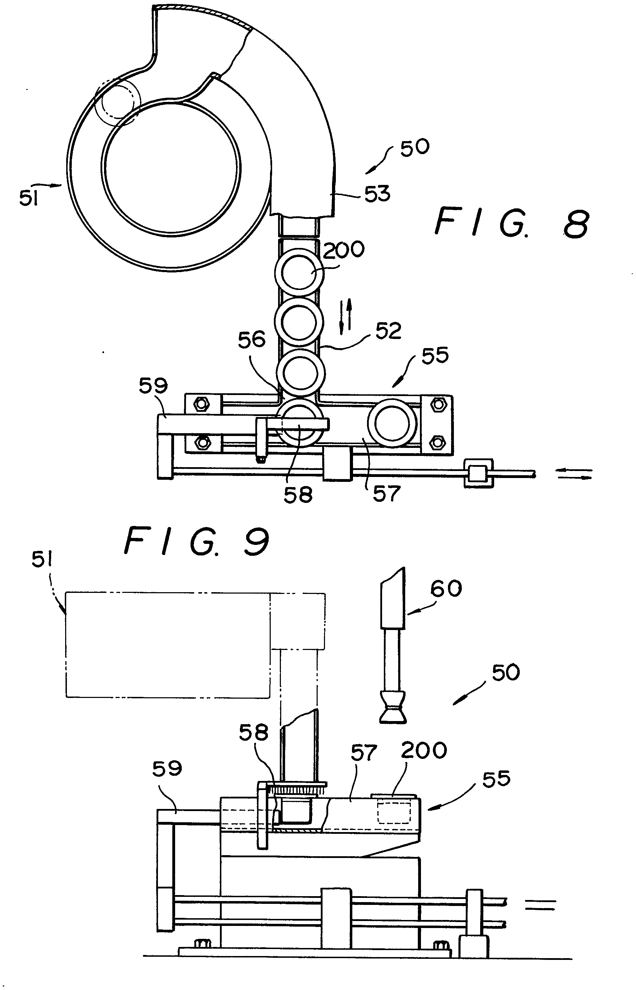

The cap body alignment unit 51 is suitably constructed in the form of a so-called parts feeder adapted to arrange a number of parts in alignment with the aid of vibration. Cap bodies 200 are arranged in alignment as they climb along the side walls of an inclined track of cap body alignment unit 51 and are correctly orientated during their movement so that their flange portion 203 is located uppermost and their cap body portion 202 is oriented downwards. After correct alignment of the cap bodies 200 they are held in a single line across a cap body alignment rail 52 which is located at the outlet of the cap body alignment unit 51. Since the cap body alignment rail 52 is supported at a slight downward inclination angle under the influence of vibration transmitted from the cap body alignment unit 51, the cap bodies 200 are caused to be arranged one after another without any intervening clearances therebetween. Part of a cover 53 is shown removed in Fig. 8 for the purpose of clear illustration but in practice the cover 53 extends across the whole length of the cap alignment rail 52 so that the cap bodies 200 are inhibited from moving away therefrom upwardly under the influence of vibration.

The cap body feeding unit 55 has an opening 56 on one side wall through which just one cap is received from the foremost end of an array of cap bodies on the cap body alignment rail 52 and a displacement passage 57 along which the cap body is displaced in a direction substantially at a right angle relative to the direction of alignment on the cap body alignment rail 52. In the drawing reference numeral 58 designates a frictional stoppage member with a friction material such as brush or the like fitted to the bottom thereof. The frictional stoppage member 58 serves to inhibit entrance of the next cap body 200 into the displacement passage 57 while the preceding cap body 200 is thrust forward along the displacement passage 57. Bristle, artificial lawn, rubber or the like materials are preferably employed as the material for the frictional stoppage member. As is apparent from the drawing, the frictional stoppage member 58 is disposed above a cap body 200 received in the displacement passage 57 while the lower end part of the frictional material is normally in contact with the upper surface of the cap body 200 with an appropriate static frictional force applied thereto. In alternative arrangements, the frictional material may be brought into contact with different parts of the cap body 200. The frictional material may be brought into and then out of contact with the cap body 200 in a properly determined timing relation.

Reference numeral 59 designates a thrusting unit adapted to displace the cap body 200 to a predetermined position along the displacement passage 57 against the frictional force existing between the frictional stoppage member 58 and the upper surface of the cap body 200. As described above, just one cap body 200 is received into the displacement passage 57 via the opening 56 and therefore the thrusting unit 59 operates to thrust just one cap body 200. Further, since the distance by which thrusting unit 59 displaces the cap body 200 can be predetermined, it follows that the cap body 200 is correctly located at a predetermined position on the displacement passage 57. Operation of the thrusting unit 59 is suitably initiated immediately upon or with a certain delay after a detection signal transmitted from the sensor S is received, and after completion of a thrusting operation the next cap body 200 located at the foremost end of the cap body alignment rail 52 is pushed forward from behind to be

received in the displacement passage 57 via the opening 56.

The cap body insert unit 60 operates by picking up a cap 200 located at the predetermined position in the displacement passage 57 of the cap body feeding unit 55 with the aid of vacuum suction or the like, transferring the thus picked-up cap body to a position located above a punched hole on the film 1 which is firmly held on a table 68 with a groove 69 formed thereon, said groove 69 serving as a passage for the cap body portion 202, causing the cap 200 to pass through a member 61, the purpose and function of which is explained below, inserting the cap body portion 202 through the punched hole with the flange portion 203 held on the film 1 and thereafter disengaging the cap body 200 from the cap body insert unit 60. Transfer and insertion of the cap body 200 are suitably initiated in response to a detection signal transmitted from the sensor S.

The member 61, which is best illustrated in Figs. 6 and 7, is designed to inhibit a cap body 200 from being removed from the hole into which it has been introduced, as for example if the suction release mechanism should be incorrectly timed, and comprises holders 62 for plates 63 (suitably thin flexible plates made of elastomeric material such as rubber or the like) adjustably fitted thereon with a suitable separation and angular relation to each other. Set screws 64 are adapted to make fine adjustment of the distance between the plates 63 in consideration of the dimensions of the cap and of the flange portion.

The holders 62 are suitably arranged opposite to one another as a pair extending in the direction of travel of the film 1, and their height can be adjusted by means of a vertically extending holder 65 so as to ensure the optimum distance between the plates 63 and the film 1.

The reason for the above arrangement is that the cap body portion 202 must always be correctly positioned in the punched hole for the subsequent sealing operation to be carried out without any hindrance.

The distance between the innermost end parts of the plates 63 is less than the outer diameter of the flange portion 203 but more than the outer diameter of the cap body portion 202.

An inclination angle adjustment bolt 66 is threadably fitted to the holder 62 as shown.

After a cap body 200 is correctly received in the punched hole on the film 1 in the above-described manner, it is transported to the cap body sealing section 70 downstream of which a film holding station $40_a$ is disposed. Since this film holding station $40_a$ is substantially identical to the first mentioned film holding station 40, no further description will be required. Heat sealing is effected between a pressing member 72 and a table 71 so that the flange portion 203 is heat sealed to the upper surface of the film 1 by thermal fusion, the said upper surface constituting the inner wall of the final package. Any type of heat sealing means may be used but we have found that heat sealing is effected at excellent operational efficiency without fear of thermal deformation of the flange portion 203 when an ultrasonic heat sealing device is employed.

Specifically, the table 71 in the cap body sealing station 70 is formed with a recess in which the cap body portion 202 is accommodated and it is adapted to move upward against the pressing member or heat seal punch 72 before the latter is lowered in response to a mark detection signal transmitted from the sensor S so that the occurrance of incorrect stretching and wrinkling of the film due to displacement of the cap body portion in the recess is effectively inhibited.

Guide rollers $12_e$ and $12_f$ disposed forwardly of the cap sealing section 70 are suitably profiled with an annular groove (not shown) at a position corresponding to the cap body 200 integrally fitted to the film 1, said annular groove having similar cross-sectional configuration to that of the cap body 200, and enabling smooth transport without hindrance due to abutment with the cap body 200.

A guide member 13 (Fig. 1) is adapted to be finely adjusted to ensure correct introduction of the film 1 to a predetermined position for the subsequent step. The guide 13 is adjustably supported by means of a support frame 14 and is formed with a groove extending in the direction of movement of the cap body 200 and being profiled in a similar manner to guide rollers $12_e$ and $12_f$. The position where the guide member 13 is mounted and the working length of the latter are determined as required.

After the film 1 has passed by the guide member 13 and the guide rollers $12_e$ and $12_f$, it is introduced into the longitudinal sealing section 80 (see Fig. 1). The longitudinal sealing section 80 comprises a tubular guide member 81 coated with an agent such as polytetrafluorethylene serving to prevent adhesion thereto, a pair of rollers 82 adapted to correctly locate the longitudinal marginal edges of the film 1, a heating member 83 having a substantially U-shaped cross-sectional configuration and a pair of pressure rollers 84 for carrying out heat sealing. While the film 1 is displaced downward, the marginal edges of the film 1 are caused to come into contact with one another in a juxtaposed relation with the aid of the rollers 82 in co-operation with the tubular guide member 81. When the film 1 comes to a stop, the juxtaposed marginal edges of the film 1 are heated to an elevated temperature in the heating member 83 and when they reach the pressure rollers 84 after further displacement, heat sealing is effected by means of the pressure rollers 84 whereby a generally tubular configuration film $1_a$ with a cap body attached at spaced intervals thereto is produced. Fig. 1 schematically illustrates a plurality of caps 200 integrally attached to the film 1 at equally spaced positions and offset by 90 degrees from the joined marginal edges of the film 1.

Where the marginal edges of the film 1 are heat sealed to one another in an overlapped or envelope fashion it may be sufficient for a heating member at an elevated temperature to be brought into contact against a part of the tubular member 81 adapted to serve as a stationary table or anvil while the film 1 is held stationary.

After completion of longitudinal heat sealing the tubular film $1_a$ is pulled downward by means of the transverse sealing section 90 so that transverse heat sealing is effected so as to form a lower sealed area while the tubular product $1_a$ is held in a flattened state. It should be noted that the direction of flattening of the tubular product $1_a$ is selectively determined so that a number of cap bodies 200 are located along the one side edge line of the flattened configuration of the tubular products $1_a$.

The packages are filled at a filling section 110 which includes piping 111 through which a certain weight or volume of content such as liquid, viscous fluid or the like is delivered by means of a metering pump and when a lower sealed area is formed in the transverse sealing step and to thereby define a pouch or open bag-shaped product the metering pump is operated to fill it with content. As shown at the lower part of Fig. 1, the transverse sealing section 90 includes a pair of thrust plates 92 which serve to define the volume of content to be filled. The thrust plates 92 are located at a predetermined position to allow a predetermined volume of content to be introduced into the package. Excessive filling is repelled away upwardly by the pressure imparted by said thrusting plates 92 and thereafter an upper sealed area (which also serves as the lower sealed area (for the next adjacent package) is formed by transverse sealing. The filled bag-shaped package is then displaced downward to be cut off along the centre line of the sealed area by means of a cutter 101.

By the method and apparatus described, bag-shaped packages with a cap body attached thereto and a predetermined volume of contents filled therein can be automatically and continuously produced at a rate of 15 to 30 bags per minute. By selection of the material used for the packages and the dimensions defining the latter a variety of bag-shaped packages can be produced, as typically illustrated in Fig. 13 at (X) and (Y). The bag-shaped package of Fig. 13 (Y) has a configuration similar to that of a conventional laminate tube which includes a cap body fitted at the foremost end thereof.

In the above-described embodiment a single elongate film was employed for producing packages but the invention should not be limited only to this. Persons skilled in this art will readily appreciate how plural lines of films may be employed making use of the teaching herein. In this case production facilities can be installed at a considerably reduced cost with a remarkably increased operational efficiency since transverse sealing may be effected by means of a common sealing unit.

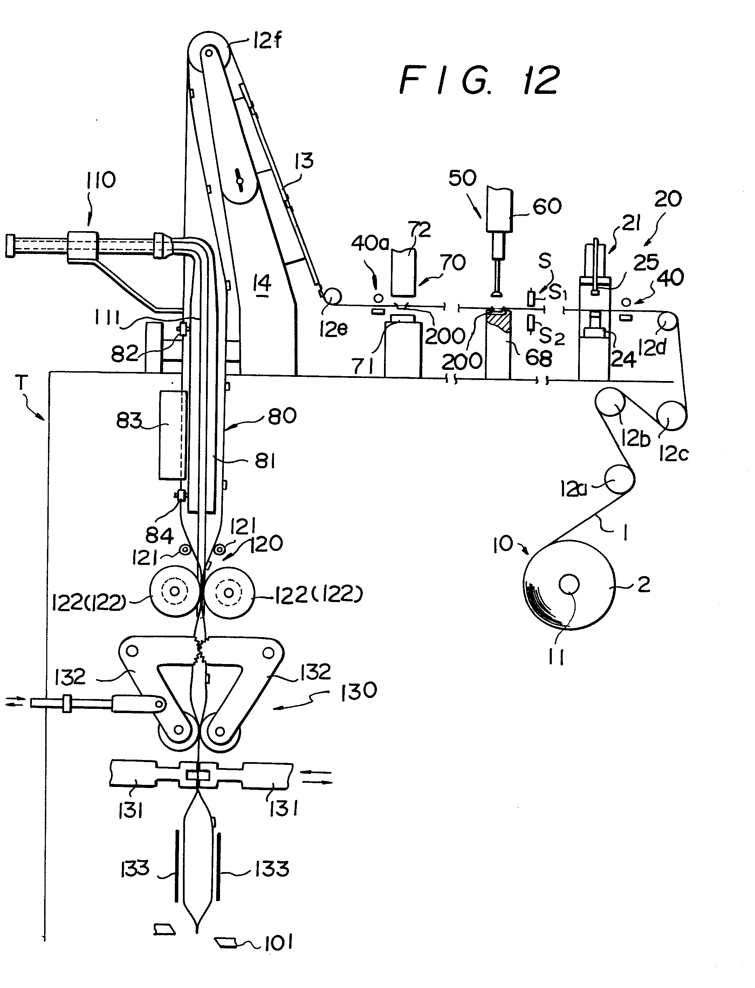

In the second embodiment of apparatus in accordance with the invention shown in Fig. 12, the same or similar components as those for the apparatus of Fig. 1 are identified with same reference numerals. Accordingly, description will be made only with respect to the film pulling section 120 and transverse sealing section 130 both of which are different in structure from those in the foregoing embodiment.

The film pulling section 120 includes a pair of guide rollers 121 one of which is formed with an annular groove so as to allow the screw cap body portion 202 constituting each of the cap bodies 200 to pass therethrough, said guide rollers 121 serving to form a slightly flattened tubular product which has been subjected to longitudinal sealing in the longitudinal sealing section 80, and two pair of film pulling rollers 122 adapted to clamp said flattened tubular product from both sides thereof. The film pulling rollers 122 remain inoperative until the operations which were initiated in response to a mark detection signal transmitted from the sensor S are completed in each of the working sections, then operate , and come to a stop again when the sensor S detects the existence of the next mark, whereby the film 1 is intermittently pulled and therefore advanced through the apparatus.

The transverse sealing section 130 includes a pair of transverse sealing members 131 in the form of opposed bars adapted to clamp the tubular film from both sides in response to a mark detection signal transmitted from the sensor S whereby both to close the upper side of a filled bag-shaped package and form the lower seal to define the next such package for filling. A pair of pusher means 132 in the form of pivoted bell cranks in mesh with each other, and having respective rollers are adapted to clamp the tubular film or bag-shaped product from both sides across its upper opened side just prior to transverse sealing to expel grossly excess quantities of filled content whereby to ensure that transverse sealing is effected uniformly. A pair of thrust plates 133 determine the volume of content filled in the finished package, said thrust plates 133 continuing in contact with the sides of the bag-shaped product at least until the transverse sealing members 131 initiate their transverse sealing operation and the pusher means 132 initiate their operation.

As will be readily apparent, packages the same as those produced by the foregoing embodiment can be produced by operating the apparatus in accordance with the second embodiment.

CLAIMS:

1. A method for the automatic and continuous production of bag-shaped packages each filled with a predetermined weight or volume of contents and having a cap body (200) integrally attached thereto, characterized in that said method comprises the steps of:

intermittently withdrawing a predetermined length of an elongate flat film (1) from a supply (2) thereof;

punching out a hole in the film (1) at predetermined intervals;

inserting the cap body portion (202) of a cap body (200) having a flange portion (203) surrounding the cap body portion (202) the inner diameter of which is larger than the inner diameter of the punched hole, through the punched hole while the film (1) is held stationary, the outer diameter of the cap body portion (202) being less than the inner diameter of the hole;

heat sealing the flange portion (203) of the cap body (200) to the film (1) while the film (1) is held stationary;

forming the flat film into a generally tubular product configuration by bringing the longitudinal.. marginal edges of the film into contact with one another in an overlapped or juxtaposed relation; and

longitudinally heat sealing the said edges together as the film passes along a downward portion of its travel;

heat sealing the tubular film (1a) transversely to the longitudinal heat seal to form an upwardly open bag-shaped product;

filling the bag-shaped product with a specific predetermined weight or volume of content;

transversely heat sealing the tubular film (1a) at a position upstream of the first said seal to form a closed filled bag-shaped product and to form the first said transverse seal for the next adjacent bag-shaped product; and

cutting off the filled bag-shaped package along the centre line of the second said transverse seal while the film (1) is held stationary.

2. A method for the automatic and continuous production of bag-shaped packages each filled with a predetermined weight or volume of contents and having a cap body (200) integrally attached thereto, characterized in that said method comprises the steps of:

intermittently withdrawing a predetermined length of an elongate flat film (1) from a supply (2) thereof;

punching out a hole in the film (1) at predetermined intervals;

inserting the cap body portion (202) of a cap body (200) having a flange portion (203) surrounding the cap body portion (202) the inner diameter of which is larger than the inner diameter of the punched hole, through the punched hole while the film (1) is held stationary, the outer diameter of the cap body portion (202) being less than the inner diameter of the hole;

heat sealing the flange portion (203) of the cap body (200) to the film (1) while the film (1) is held stationary;

forming the flat film into a generally tubular product configuration by bringing the longitudinal marginal edges of the film into contact with one another in an overlapped or juxtaposed relation; and

longitudinally heat sealing the said edges together as the film is held stationary in a downward portion of its path of travel;

heat sealing the tubular film (1a) transversely to the longitudinal heat seal to form an upwardly open bag-shaped product while the film is held stationary;

filling the bag-shaped product with a specific predetermined weight or volume of content;

transversely heat sealing the tubular film (1a) at a position upstream of the first said seal to form a closed filled bag-shaped product and to form the first said transverse seal for the next adjacent bag-shaped product while the film (1) is held stationary; and

cutting off the filled bag-shaped package along the centre line of the second said transverse seal while the film (1) is held stationary.

3. A method according to Claims 1 or 2, further characterized in that the film (1) is made of synthetic resin and has a series of marks printed thereon at predetermined spacings in the longitudinal direction and in that the intermittent travel of the film (1) is controlled by a sensor (S) detecting the successive marks.

4. A method according to Claim 3, further characterized in that the film (1) is intermittently displaced by a predetermined length with the aid of a pair of transverse sealing members (91) in the form of bars located opposite one another with the tubular film (1a) interposed therebetween said sealing members (91) having an operational cycle comprising displacement toward the tubular film (1a) from a waiting position (A) to clamp it from both sides when a predetermined period of time has elapsed since detection of a said mark by the sensor (S), pulling the film (1), releasing the film from its clamped state in response to a signal transmitted from the sensor (S) when the next mark is detected by the latter, and resuming the original waiting position (A) for the said predetermined period of time.

5. A method according to Claim 3, further characterized in that the film (1) is intermittently displaced by a predetermined length with the aid of at least two pairs of rollers (122) located opposite to one another at a position between the section (80) where said longitudinal sealing is effected and the section (90) where said transverse sealing is effected and clamping the side portions of the generally flattened longitudinally heat sealed tubular film (1a), rotation of said rollers being initiated when a predetermined period of time has elapsed since detection of a said mark by the sensor (S) and ceasing in response to a signal transmitted from the sensor (S) when the next mark is detected by the latter.

6. A method according to Claim 3, further characterized in that displacement of the film (1) is intermittently halted in response to a signal transmitted from the sensor (S) when one of the marks is detected, further displacement of the film (1) being inhibited by means of a film holding member (48) adapted to firmly hold the film (1), the film holding member (48) being released from the operative state after a predetermined period of time to allow displacement of the film to be initiated again.

7. A method according to any of Claims 1 to 3, further characterized in that transverse heat sealing is carried out by operating a pair of transverse sealing members (91, 131) in the form of opposed bars adapted to move toward the tubular film or bag-shaped product to clamp the latter from both sides.

8. A method according to Claim 7, further characterized in that the volume of content to be filled in the bag-shaped product is set by means of a pair of thrust plates (92) adapted to press the content filled bag-shaped product from both sides when the upper open end thereof is transversely heat sealed by means of the transverse sealing members (91), said thrust plates (92) being operatively coupled to means supporting the transverse sealing members (91).

9. A method according to any preceding claim, further characterized in that the cap body fitting hole is punched out by operating a punching unit (21) adapted to drive a movable punch (25) through which a compressed air passage (25b) extends so as to allow compressed air to be blown therethrough whereby any film removed is blown therefrom to avoid the possibility of it being incorporated in the package.

10. A method according to any preceding claim, further characterized in that the cap body (200) is fitted into the punched hole by operating a cap body feeding unit (55) adapted to transfer the cap body to the position of the hole with the flange portion side thereof held by vacuum suction, which suction is released after completion of a fitting operation.

11. Apparatus for the automatic and continuous production of bag-shaped packages each filled with a predetermined weight or volume of contents and having a cap body (200) integrally attached thereto, characterized in that said apparatus comprises:

transport means for causing intermittent longitudinal travel by a predetermined length of an elongate flat film (1) drawn from a supply (2) thereof;

a punching section (20) adapted to punch out a hole on the film (1) each time the latter is held stationary during its intermittent forward travel;

a cap body fitting section (50) located downstream of said punching section (20) and adapted to fit the cap body section (202) of a cap body (200), having a flange portion (203) surrounding the cap body portion (202), the outer diameter of which is larger than the inner diameter of the punched hole, into the punched hole each time the film (1) is held stationary, the outer diameter of the cap body portion (202) being less than the inner diameter of the punched hole;

a cap body sealing section (70) located downstream of said cap body fitting section (50) and adapted, each time the film (1) is held stationary, to heat seal the flange portion (203) of a cap body (200) to the film (1);

a longitudinal sealing section (80) located downstream of said cap body sealing section (70) and adapted to join the respective longitudinal marginal edges of the film (1) together in overlapped or juxtaposed relation to form a generally tubular configuration;

a transverse sealing section (90, 130) downstream of said longitudinal sealing section (80) and adapted to form a transverse seal across the tubular film (1a) thereby to form an upwardly open bag-shaped product for filling and to close an already filled such product;

a filling section (110) adapted to fill an upwardly open bag-shaped product with a predetermined weight or volume of content at said transverse sealing section (90, 130); and

a cutting section (100) downstream of said transverse sealing section (90, 130) and adapted each time the film (1) is held stationary, to separate a filled bag-shaped product from the next adjacent bag along the centre line of the transverse heat sealed area therebetween.

12. Apparatus according to Claim 11, further characterized in that a sensor (S) is disposed in the path of travel of said elongate film from the supply (2) thereof and is adapted to detect respective marks of a series of marks printed on said film at predetermined spacings in the longitudinal direction thereof, and to control said transport means in dependence thereon.

13. Apparatus according to Claim 12, further characterized in that the transverse sealing section (90) includes said transport means, a pair of transverse sealing members (91) in the form of bars located opposite one another with the tubular film (1a) interposed therebetween and arranged to be actuated in an operational cycle comprising displacement toward the tubular film (1a) from a waiting position (A) to clamp it from both sides when a predetermined period of time has elapsed since detection of a said mark by the sensor (S), pulling the film (1) downwardly in the direction of travel through the apparatus while maintaining said clamp and thereby forming said transverse heat seal, releasing the film from its clamped state in response to a signal transmitted from the sensor (S) when the next mark is detected by the latter, and resuming the original waiting position (A) for the said predetermined period of time.

14. Apparatus according to Claim 11, further characterized in that the transverse sealing section (130) is adapted to form a heat seal across the tubular film or bag-shaped product while it is held stationary, and in that the transverse sealing section (13) comprises a pair of transverse sealing members (131) in the form of bars located opposite one another with the tubular film or bag-shaped product interposed therebetween for clamping the latter from both sides, and pusher means (132) including two rollers adapted to be brought together to press the upper open end portion of a filled bag-shaped product from both sides just before transverse heat sealing is effected by means of said transverse sealing members (131) whereby to expel grossly excess quantities of filled content.

15. Apparatus according to Claim 12, further characterized in that said transport means comprises a film pulling section (120) downstream of said longitudinal sealing section (80) and upstream of the transverse sealing section (130) and comprising at least two pairs of pulling rollers (122) adapted to draw a predetermined length of film (1) from said supply (2) thereof while clamping the tubular film (1a) from both sides thereof, said film pulling section (120) being adapted to commence pulling when a predetermined period of time has elapsed since detection of a said mark by the sensor (S) and to cease in response to a signal transmitted from the sensor (S) when the next mark is detected by the latter.

16. Apparatus according to Claim 12, further characterised in that the operations of the punching station (20), the cap body fitting section (60) and the cap body sealing section (70) are each initiated in response to detection signals transmitted by the sensor (S).

17. Apparatus according to Claim 12 or 16, further characterized in that the punching section (20) includes a punching unit (21) which comprises: a stationary punching die (24), and a movable punch (25) adapted to be actuated in response to a detection signal transmitted from the sensor (S), and having a through hole (25b) through which compressed air is arranged to be blown to remove fragments of film punched out from the film (1),

18. Apparatus according to both Claims 16 and 17, further characterized in that the punching section (20) further includes a film holding station (40) located upstream of the punching unit (21) and comprising a stationary table (41) and a movable member (48) adapted to be actuated in response to a mark detection signal transmitted from the sensor (S) to firmly hold the film (1) on said stationary table (41) until the operations of the punching section (20), the cap body fitting section (50) and of the cap body sealing section (70) are completed.

19. Apparatus according to any of Claims 12 or 16 to 18, further characterized in that the cap body fitting section (50) includes a cap body fitting unit (60) adapted to be actuated in response to a mark detection signal transmitted from the sensor (S) to transfer a cap body (200) to a position above a punched hole while the said cap body is held by vacuum suction with its flange portion (203) side uppermost and then to insert the cap body into the punched hole by a lowering operation, and a member (61) adapted to inhibit the cap body (200) from being removed from the punched hole even in the event of incorrect timing of suction releasing operation of the cap body fitting unit (60).

20. Apparatus according to any of Claims 11 to 19, further characterized in that the cap body fitting section (50) includes: a cap body alignment unit (51) adapted to arrange a plurality of cap bodies (200) in correct alignment with the flange portion (203) of each of the cap bodies (200) uppermost; and a cap body feeding unit (55) adapted to receive just one from the aligned array of cap bodies (200) into a cap body displacement passage (57), to hold it stationary at the received position with the aid of a frictional stoppage member (58) adapted to come into frictional contact with the flange portion (203) of the cap body (200) and then to actuate a thrusting member (59) to displace the cap body (200) against frictional force of the frictional stoppage member (58) and in a direction away from the array of cap bodies (200) to a position where it is held stationary, whereby the cap bodies (200) are transferred to the cap body fitting section (50) one by one.

21. Apparatus according to Claim 12 or any claim appendent thereto, further characterized in that heat sealing in said cap body sealing section (70) is arranged to be performed by means of a heat seal table (71) with a cap body receiving recess formed thereon and a heat seal punch (72), said heat seal table (71) being adapted to be raised in response to a mark detection signal transmitted from the sensor (S) and then to descend after a predetermined period of time has elapsed, and said heat seal punch (72) being adapted to descend in response to a mark detection signal transmitted from the sensor (S) to heat seal the flange portion (203) of the cap body (200) to the film (1).

22. Apparatus according to Claim 12 or any claim appendent thereto, further characterized in that the cap body sealing section (70) includes a film holding station (40a) located downstream of the position where heat sealing is effected and comprising a stationary table (41) and a movable member (48) adapted to be actuated in response to a mark detection signal transmitted from the sensor (S) to firmly hold the film (1) on said stationary table (41) until operation of each of the punching section (20), the cap body fitting section (50) and the cap body sealing section (70) is completed.

23. Apparatus according to Claim 12 or any claim appendent thereto, further characterized in that the longitudinal sealing section (80) includes a tubular guide member (81) for guiding the film (1) during its intermittent forward movement so as to form a generally tubular configuration (1a) and a heat sealing member adapted to be actuated in response to a mark detection signal transmitted from the sensor (S) to heat seal the longitudinal marginal edge regions of the tubular film (1a) together in an overlapped relation.

24. Apparatus according to any of Claims 11 to 22, further characterized in that the longitudinal sealing section (80) comprises: a tubular guide member (81) for guiding the film (1) during its intermittent forward movement so as to form a generally tubular configuration (1a); a pair of clamping rollers (82) located upstream of said tubular guide member (81) to firmly clamp the longitudinal marginal edge regions of the tubular configuration film (1a) in juxtaposed relation with each other; a heating member (83) disposed parallel to the tubular guide member (81) to heat the joined marginal edge regions to an elevated temperature at which they are heat sealed together while the film (1) is held stationary, said heating member (83) having a longitudinally extending groove formed thereon so as to allow the joined marginal regions to extend through said groove while said member is heated; and a pair of clamping rollers (84) located downstream of the tubular guide member (81) to firmly clamp the heated marginal edge regions thereby to heat seal them together during downward movement of the tubular film (1a).

25. Apparatus according to Claim 11, further characterized in that the transverse sealing section (90) comprises: a pair of transverse sealing members (91) in the form of bars located opposite one another with an upward open bag-shaped product interposed therebetween; and a pair of thrust plates (92) adapted to be actuated toward the bag-shaped product just before transverse sealing members (91) initiate their transverse heat sealing operation to press the upward open content filled bag-shaped product from both sides thereby to determine the volume of content filled therein when the transverse seal is effected.

FIG. 1
12f
13
14
110
111
12e
40a
70
72
50
60
S1
S
25
21
20
40
12d
82
200
71
61
68
S2
24
T
80
83
81
84
1a
90
91
A
B
92
D
C
100
101
12b
12c
12a
10
1
2
11

0107474

21
27
28
23
25
22
25c
1
24a
26
25b
25a
24b
24

FIG. 3

33
29a
29b
31
32
23
22
25a
25c
24a
25b
26
27
25
24b
1

FIG. 2

0107474

40
45
44
46
47

F I G. 4

F I G. 5

45
44
40
48
1
45
44
46
200
43
42
46
47
41
47

61
62
63
64
65
66
200

FIG. 7

1
60
61
62
63
64
66
68
69
200

FIG. 6

0107474

50
51
53
FIG. 8
200
52
56
55
59
58
57
FIG. 9
51
60
50
58
57
200
59
55

FIG. 10

70
72
203
1
200
71
201
204
202

FIG. 11

111
80
82
82
81
83
84
84
1a

0107474

F I G. 12
12f
13
14
110
111
82
83
80
81
84
121
121
120
122(122)
122(122)
132
132
130
131
131
133
133
101
T
50
60
72
70
40a
12e
71
200
200
68
S
S1
S2
21
20
25
40
24
12d
12b
12c
12a
1
10
2
11

0107474

(X)

FIG. 13

200
X

(Y)

Y
200